# EUROPEAN PATENT SPECIFICATION

(11) **EP 4 509 238 B1**
(45) Date of publication and mention of the grant of the patent: **29.04.2026**
(21) Application number: 23788214.7
(22) Date of filing: 04.04.2023
(51) Int. Cl.: F16D 63/00, B21D 5/02, B21D 11/12, F16H 3/54, F16D 11/14, H02K 7/116, B30B 15/12, F16H 3/00

(54) **PRESS BRAKE AND TABLE DRIVE METHOD FOR PRESS BRAKE**
ABKANTPRESSE UND TISCHANTRIEBSVERFAHREN FÜR ABKANTPRESSE
PRESSE-PLIEUSE ET PROCÉDÉ D'ENTRAÎNEMENT DE TABLE POUR PRESSE-PLIEUSE

(30) Priority: 13.04.2022 JP 2022066193
(43) Date of publication of application: 19.02.2025
(73) Proprietor: Amada Co., Ltd., Isehara-shi, Kanagawa 259-1196 (JP)
(72) Inventor: GOTO Shintaro, Isehara-shi, Kanagawa 259-1196 (JP); ABE Kenji, Isehara-shi, Kanagawa 259-1196 (JP)
(74) Representative: Grünecker Patent- und Rechtsanwälte PartG mbB
(86) International application number: PCT/JP2023/013928
(87) International publication number: WO 2023/199795

(56) References cited:
- DE-A1- 19 959 394
- JP-A- 2002 168 310
- JP-A- 2017 219 148
- JP-A- 2019 171 453
- JP-A- H05 337 555
- JP-A- H05 337 555

## Description

### [TECHNICAL FIELD]

The present disclosure relates to a press brake and a table driving method for the press brake.

### [BACKGROUND ART]

Conventionally, there has been known a press brake which bends a workpiece by moving a movable table on which a tool such as a punch is attached to the up-down direction with respect to a fixed table to which a tool such as a die is attached. A method using an electric motor has been known as a method for driving the moving table in addition to a method using hydraulic pressure.

For example, Patent Literature 1 discloses a technology of performing a high-speed movement and a low-speed movement of a movable table with one electric motor by switching a reduction ratio of a speed reducer.

### [CITATION LIST]

### [PATENT LITERATURE]

[Patent Literature 1] Japanese Patent NO. 3884352 DE19959394 discloses a press brake according to the preamble of claim 1.

### [SUMMARY OF THE INVENTION]

However, in order to acquire sufficient operation performance of a press brake, it is necessary to set a sufficiently large reduction ratio during a low-speed movement. In addition, since the movable table, which is a heavy body, receives a large downward force due to its own weight, it is necessary to prevent the movable table from descending unexpectedly. It is necessary to satisfy these requirements, and thus the table driving for the press brake using an electric motor has room for improvement.

The invention is defined by a press brake according to claim 1 and a table driving method for a press brake according to claim 12, the press brake including: a movable table that is disposed opposite to a fixed table in an up-down direction; a conversion mechanism that moves the movable table in the up-down direction by converting a rotation motion into a linear motion; an electric motor provided with an electric motor shaft; a speed reducer that includes a mechanical paradox planetary gear mechanism, and outputs a rotation of the electric motor shaft to the conversion mechanism by reducing the rotation of the electric motor shaft at either a first reduction ratio or a second reduction ratio larger than the first reduction ratio; and a clutch that switches a reduction ratio in the speed reducer between the first reduction ratio and the second reduction ratio, in which the clutch includes: a first clutch tooth that is connected to a first rotation element included in the speed reducer and rotates integrally with the first rotation element; a second clutch tooth that is connected to a second rotation element included in the speed reducer and rotates integrally with the second rotation element; and a fixed clutch tooth that is provided between the first clutch tooth and the second clutch tooth disposed to be opposite to each other such that a tooth structure of the first clutch tooth and a tooth structure of the second clutch tooth face each other, and moves between the first clutch tooth and the second clutch tooth, and the fixed clutch tooth includes: as a switchable operation mode, a first mode in which the speed reducer operates at the second reduction ratio by meshing only with the first clutch tooth to fix the first rotation element; a second mode in which the speed reducer operates at the first reduction ratio by meshing only with the second clutch tooth to fix the second rotation element; and a both-engaging mode of meshing with each of the first clutch tooth and the second clutch tooth when changing a mode between the first mode and the second mode.

According to an aspect of the present disclosure, since the speed reducer includes a mechanical paradox planetary gear mechanism, a sufficiently large second reduction ratio can be acquired. In addition, since the fixed clutch tooth operates in a both-engaging mode when changing a mode between a first mode and a second mode, the movable table, which is a heavy body, can be maintained in an immovable state.

According to an aspect of the present disclosure, it is possible to prevent the movable table, which is a heavy body, from descending unexpectedly while acquiring necessary operation performance as a press brake.

### BRIEF DESCRIPTION OF DRAWINGS

[FIG. 1] FIG. 1 is a cross-sectional view illustrating a main portion of a table driving device of a press brake.
[FIG. 2] FIG. 2 is a front view illustrating a structure of the press brake.
[FIG. 3] FIG. 3 is a diagram illustrating an AA cross-section of FIG. 2.
[FIG. 4] FIG. 4 is an explanatory diagram illustrating a detection device for detecting a position of a fixed clutch tooth.
[FIG. 5A] FIG. 5A is an explanatory diagram illustrating a second mode of the fixed clutch tooth.
[FIG. 5B] FIG. 5B is an explanatory diagram illustrating a first mode of the fixed clutch tooth.
[FIG. 5C] FIG. 5C is an explanatory diagram illustrating a both-engaging mode of the fixed clutch tooth.
[FIG. 6A] FIG. 6A is a diagram illustrating a method of controlling a clutch according to a second embodiment.
[FIG. 6B] FIG. 6B is a diagram illustrating the method of controlling the clutch according to the second embodiment.
[FIG. 6C] FIG. 6C is a diagram illustrating the method of controlling the clutch according to the second embodiment.
[FIG. 6D] FIG. 6D is a diagram illustrating the method of controlling the clutch according to the second embodiment.
[FIG. 7A] FIG. 7A is a diagram illustrating a method of controlling a clutch according to a third embodiment.
[FIG. 7B] FIG. 7B is a diagram illustrating the method of controlling the clutch according to the third embodiment.
[FIG. 7C] FIG. 7C is a diagram illustrating the method of controlling the clutch according to the third embodiment.

### [DETAILED DESCRIPTION OF THE INVENTION]

A press brake and a table driving method for the press brake according to a present embodiment will be described below with reference to the drawings.

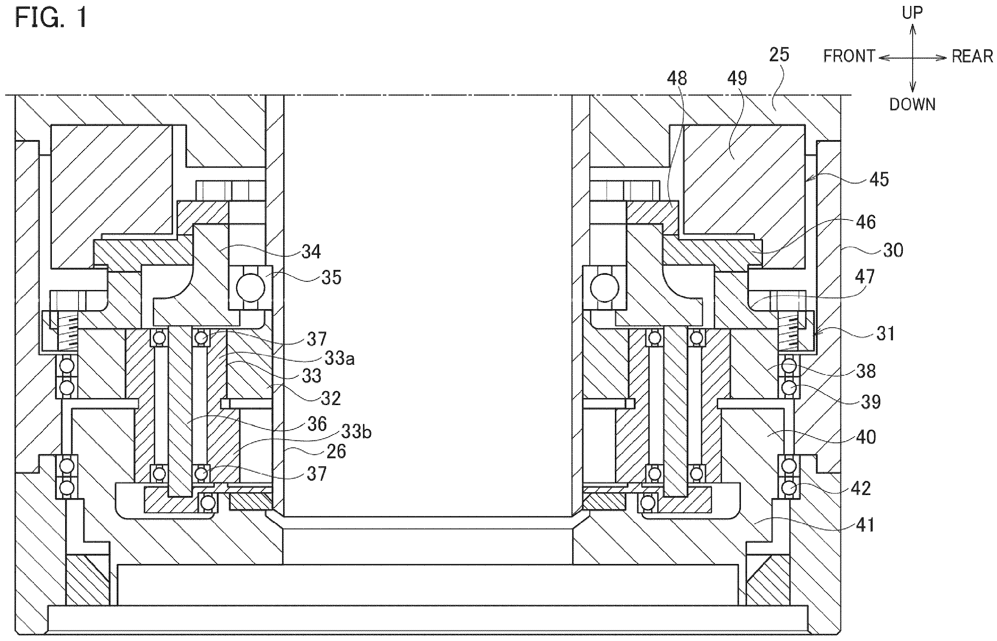

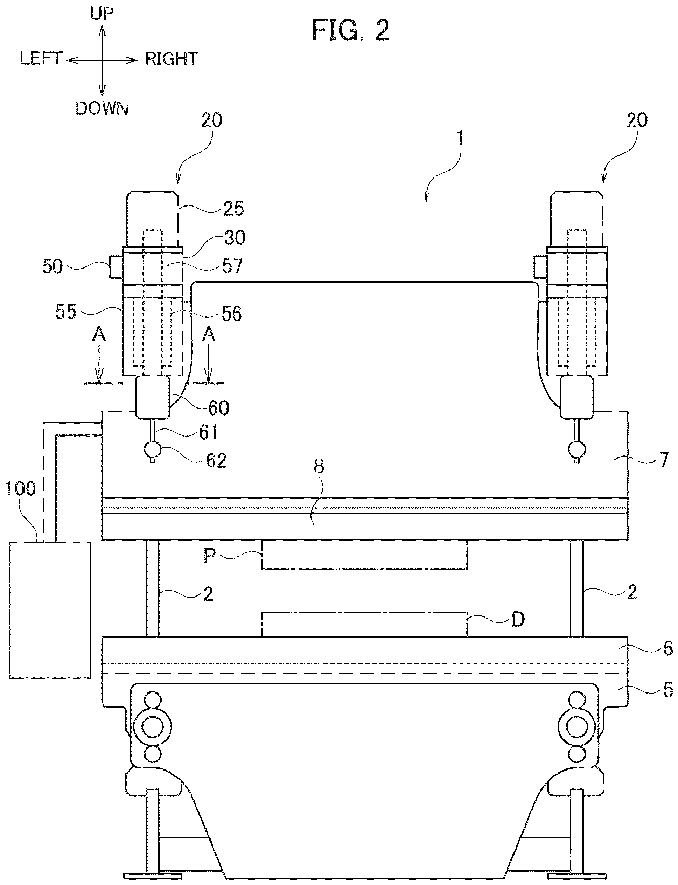

FIG. 1 is a cross-sectional view illustrating an main portion of a table driving device of a press brake. FIG. 2 is a front view illustrating a structure of the press brake. In describing the structure of the press brake, a left-right direction, a front-rear direction, and an up-down direction are used as definitions of directions. The left-right direction and the front-rear direction correspond to two directions orthogonal to each other in the horizontal direction, and the up-down direction corresponds to the vertical direction. However, these directions are used only for the sake of convenience to explain the press brake and the table driving method for the press brake according to the present embodiment.

A press brake 1 according to the present embodiment includes: an upper table 7 that is disposed opposite to a lower table 5 in an up-down direction; a ball screw mechanism 55 that moves the upper table in the up-down direction by converting a rotation motion into a linear motion; an electric motor 25 provided with an electric motor shaft 26; a speed reducer 31 that includes a mechanical paradox planetary gear mechanism, and outputs a rotation of the electric motor shaft 26 to the ball screw mechanism 55 by reducing the rotation of the electric motor shaft 26 at either a first reduction ratio or a second reduction ratio larger than the first reduction ratio; and a clutch 45 that switches a reduction ratio in the speed reducer 31 between the first reduction ratio and the second reduction ratio. The clutch 45 includes: a first clutch tooth 47 that is connected to a first rotation element included in the speed reducer 31 and rotates integrally with the first rotation element; a second clutch tooth 48 that is connected to a second rotation element included in the speed reducer 31 and rotates integrally with the second rotation element; and a fixed clutch tooth 46 that is provided between the first clutch tooth 47 and the second clutch tooth 48 disposed to be opposite to each other such that the first clutch tooth 47 and the second clutch tooth 48 face each other, and moves between the first clutch tooth 47 and the second clutch tooth 48. The fixed clutch tooth 46 includes: as a switchable operation mode, a first mode in which the speed reducer 31 operates at the second reduction ratio by meshing only with the first clutch tooth 47 to fix the first rotation element; a second mode in which the speed reducer 31 operates at the first reduction ratio by meshing only with the second clutch tooth 48 to fix the second rotation element; and a both-engaging mode of meshing with each of the first clutch tooth 47 and the second clutch tooth 48 when changing a mode between the first mode and the second mode.

### (First Embodiment)

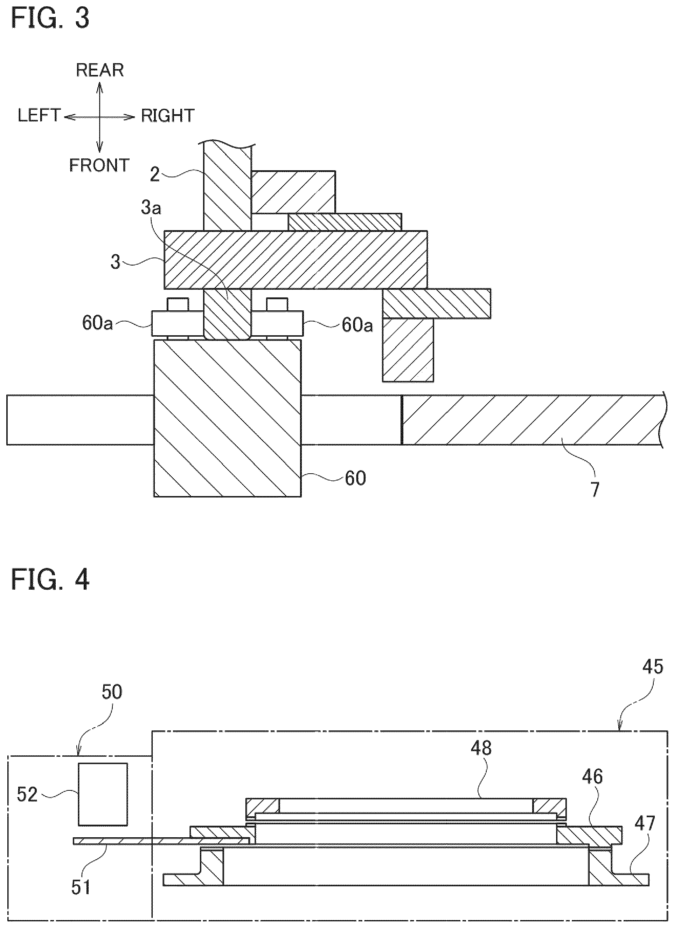

A press brake 1 according to a first embodiment will be described in detail below with reference to FIGS. 1 to 4. FIG. 3 is a diagram illustrating an AA cross-section of FIG. 2. FIG. 4 is an explanatory diagram illustrating a detection device for detecting a position of a fixed clutch tooth.

The press brake 1 bends a plate-like workpiece such as a sheet metal in cooperation with an upper tool P such as a punch and a lower tool D such as a die. The press brake 1 includes right and left side frames 2, a lower table 5 as a fixed table, an upper table 7 as a movable table, right and left table driving devices 20, and a control device 100.

The right and left side frames 2 are spaced apart in the left-right direction such that they are opposite to each other.

The lower table 5 extends in the left-right direction and is supported by the front lower portions of the right and left side frames 2. On the upper side of the lower table 5, a lower tool holder 6 for detachably holding a lower tool D is provided along the left-right direction. A holder groove for holding the base (shank) of the lower tool D is formed in the lower tool holder 6 along the left-right direction.

The upper table 7 extends in the left-right direction and is supported by the front upper portions of the left and right side frames 2. The upper table 7 is configured to be movable in the up-down direction with respect to the left and right side frames 2.

On the lower side of the upper table 7, an upper tool holder 8 for detachably holding an upper tool P is provided along the left-right direction. A holder groove for holding the base (shank) of the upper tool P is formed in the upper tool holder 8 along the left-right direction.

The right and left table driving devices 20 are fixed to the respective upper portions of the left and right side frames 2, respectively. The respective table driving devices 20 move the upper table 7 in the up-down direction. The table driving device 20 is mainly configured of an electric motor 25, a speed reducer unit 30, and a ball screw mechanism 55.

The electric motor 25 is a servomotor, for example, and includes an electric motor shaft 26 rotating around a shaft line. The speed reducer unit 30 reduces the rotation of the electric motor shaft 26 by a predetermined reduction ratio and outputs the reduced rotation to the ball screw mechanism 55. The speed reducer unit 30 is mainly configured of a speed reducer 31 and a clutch 45, the details of which will be described later.

The ball screw mechanism 55 moves the upper table 7 in the up-down direction by converting a rotation motion of an output unit 41 of the speed reducer unit 30 into a linear motion. The ball screw mechanism 55 includes a ball screw nut 56 and a ball screw shaft 57. The ball screw nut 56 is axially supported inside the housing of the ball screw mechanism 55 via a bearing. The ball screw nut 56 is connected to the output unit 41 of the speed reducer unit 30 and rotates according to the rotation of the output unit 41. The ball screw shaft 57 is screwed to the ball screw nut 56 and moves in the up-down direction as the ball screw nut 56 rotates forward and backward.

A connection block 60 is connected to the lower end of the ball screw nut 56. A suspension bolt 61 that hangs in the up-down direction is attached to the lower end of the connection block 60, and the suspension bolt 61 supports a support shaft 62 that penetrates the upper table 7 in the front-rear direction. The ball screw nut 56 is connected to the upper table 7 via the connection block 60, the suspension bolt 61, and the support shaft 62. With this structure, the upper table 7 moves in the up-down direction according to the movement of the ball screw shaft 57 in the up-down direction.

As illustrated in FIG. 3, a pair of restricting rollers 60a separated in the left-right direction are provided on the rear surface of the connection block 60. A roller guide 3a extending in the up-down direction is provided on the front surface of the support member 3 provided on the side frame 2. The roller guide 3a is clamped by the pair of restricting rollers 60a provided on the connection block 60.

As illustrated in FIG. 2, the control device 100, such as a numerical control (NC) device for controlling the operation of the press brake 1, is supported in the left side frame 2 via a connecting arm. The control device 100 controls the speed reducer unit 30 and the electric motor 25.

In the press brake 1 having such a structure, a workpiece is positioned on the lower tool D attached to the lower tool holder 6 of the lower table 5. When the upper table 7 having the upper tool P attached to the upper tool holder 8 descends toward the lower table 5, the workpiece is pressurized between the upper tool P and the lower tool D. The workpiece is bent at a desired bending angle in cooperation with the upper tool P and the lower tool D.

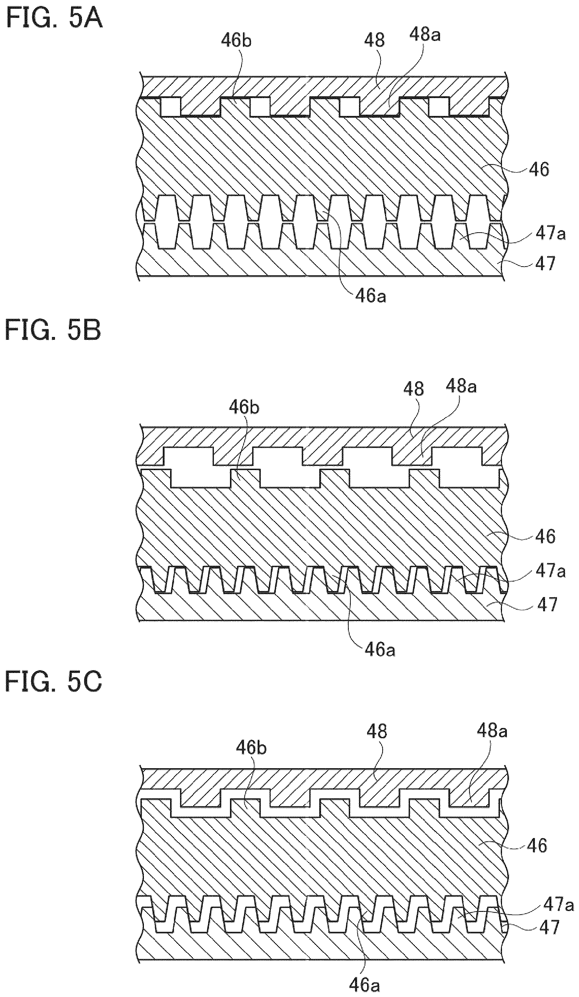

The speed reducer unit 30 will be described in detail below with reference to FIGS. 1 and 4, and FIGS. 5A to 5C. FIG. 4 is an explanatory diagram illustrating a detection device for detecting a position of a fixed clutch tooth. FIG. 5A is an explanatory diagram illustrating a second mode of the fixed clutch tooth. FIG. 5B is an explanatory diagram illustrating a first mode of the fixed clutch tooth. FIG. 5C is an explanatory diagram illustrating a both-engaging mode of the fixed clutch tooth.

As illustrated in FIG. 1, the speed reducer unit 30 includes the speed reducer 31 and the clutch 45. The speed reducer 31 reduces a rotation of the electric motor shaft 26 at either a first reduction ratio or a second reduction ratio larger than the first reduction ratio, and outputs the reduced rotation. The clutch 45 switches a reduction ratio in the speed reducer 31 between the first reduction ratio and the second reduction ratio.

The speed reducer 31 includes a mechanical paradox planetary gear mechanism. Specifically, the speed reducer 31 includes a sun gear 32, a plurality of planetary gear units 33, a planetary carrier 34, a first internal gear 38, a second internal gear 40, and an output unit 41.

The sun gear 32 is externally fitted with the outer peripheral surface of the electric motor shaft 26. The sun gear 32 rotates integrally with the electric motor shaft 26.

The plurality of planetary gear units 33 are provided around the sun gear 32, and are equally spaced in the circumferential direction. Each of the planetary gear units 33 includes a first planetary gear 33a and a second planetary gear 33b. The first planetary gear 33a meshes with the sun gear 32 and rotates according to the rotation of the sun gear 32. The second planetary gear 33b is provided coaxially with the first planetary gear 33a, and rotates integrally with the first planetary gear 33a. In the present embodiment, the first planetary gear 33a and the second planetary gear 33b have a two-stage structure that is integrated in the up-down direction, and the first planetary gear 33a and the second planetary gear 33b rotate on the same axis.

The planetary carrier 34 rotates around the electric motor shaft 26 via a bearing 35 externally fitted with the electric motor shaft 26. The planetary carrier 34 is provided with a plurality of unit shafts 36 along the circumferential direction. A bearing 37 is externally fitted with each of the unit shafts 36, and the planetary gear unit 33 is attached thereto via the bearing 37. The planetary carrier 34 rotatably supports each of the plurality of planetary gear units 33.

The first internal gear 38 is an internal gear engaged with the first planetary gear 33a. The first internal gear 38 is provided on the inner peripheral surface of the housing of the speed reducer unit 30 via the bearing 39, and can rotate around the electric motor shaft 26.

The second internal gear 40 has the number of teeth different from those of the first internal gear 38, and is an internal gear engaged with the second planetary gear 33b. The second internal gear 40 is provided on the inner peripheral surface of the housing of the speed reducer unit 30 via the bearing 42, and can rotate around the electric motor shaft 26.

The output unit 41 is integrally formed with the second internal gear 40 and rotates integrally with the second internal gear 40. The output unit 41 is connected to the ball screw nut 56 of the ball screw mechanism 55 described above.

The clutch 45 includes a fixed clutch tooth 46, a first clutch tooth 47, and a second clutch tooth 48. Each of the fixed clutch tooth 46, the first clutch tooth 47, and the second clutch tooth 48 is an annular member, and has a tooth structure as described later. The first clutch tooth 47 and the second clutch tooth 48 are disposed to be opposite to each other such that a tooth structure of the first clutch tooth 47 and a tooth structure of the second clutch tooth 48 face each other. The fixed clutch tooth 46 is provided between the first clutch tooth 47 and the second clutch tooth 48.

The fixed clutch tooth 46 moves between the first clutch tooth 47 and the second clutch tooth 48. The fixed clutch tooth 46 is restricted from moving in a direction other than the up-down direction including a rotation in the circumferential direction. As illustrated in FIGS. 5A to 5C, the fixed clutch tooth 46 is provided with a plurality of first engaging teeth 46a along the circumferential direction and a plurality of second engaging teeth 46b along the circumferential direction. Each of the first engaging teeth 46a projects toward the first clutch tooth 47, and each of the second engaging teeth 46b projects toward the second clutch tooth 48.

As illustrated in FIG. 1, the first clutch tooth 47 is connected to the first internal gear 38, which is a first rotation element and included in the speed reducer 31, and rotates integrally with the first internal gear 38. As illustrated in FIGS. 5A to 5C, the first clutch tooth 47 is provided with a plurality of third engaging teeth 47a along the circumferential direction. Each of the third engaging teeth 47a projects toward the fixed clutch tooth 46 and the second clutch tooth 48 side.

As illustrated in FIG. 1, the second clutch tooth 48 is connected to the planetary carrier 34, which is a second rotation element and included in the speed reducer 31, and rotates integrally with the planetary carrier 34. As illustrated in FIGS. 5A to 5C, the second clutch tooth 48 is provided with a plurality of fourth engaging teeth 48a along the circumferential direction. Each of the fourth engaging teeth 48a projects toward the fixed clutch tooth 46 and the first clutch tooth 47 side.

As illustrated in FIG. 1, the clutch 45 includes a pressing member (not illustrated) and a solenoid 49. The pressing member is, for example, a compression coil spring, and presses the fixed clutch tooth 46 toward the first clutch tooth 47 side. That is, the fixed clutch tooth 46 normally moves toward the first clutch tooth 47 side when receiving the pressing force of the pressing member. Meanwhile, the solenoid 49 moves the fixed clutch tooth 46 toward the second clutch tooth 48 side by attracting the fixed clutch tooth 46 using an electromagnetic force. That is, when the solenoid 49 is operated to attract the fixed clutch tooth 46 by an electromagnetic force, the fixed clutch tooth 46 moves toward the second clutch tooth 48 side against the pressing force of the pressing member.

The clutch 45 further includes a capacitor (not illustrated) that supplies power to the solenoid 49 when external power to the solenoid 49 is interrupted.

As illustrated in FIG. 4, the press brake 1 further includes a detection device 50 for detecting the position of the fixed clutch tooth 46 between the first clutch tooth 47 and the second clutch tooth 48. The position of the fixed clutch tooth 46 detected by the detection device 50 is output to the control device 100.

The detection device 50 includes a detection plate 51 and a sensor 52.

The detection plate 51 is a plate elongated in one direction, and has one end fixed to the fixed clutch tooth 46 and the other end extended to the outside of the housing of the clutch 45. The detection plate 51 moves in the direction of the shaft line of the electric motor shaft 26 according to the movement of the fixed clutch tooth 46.

The sensor 52 is provided outside the housing of the clutch 45. The sensor 52 is fixed to a predetermined position above the detection plate 51, that is, a predetermined position on the second clutch tooth 48 side with respect to the fixed clutch tooth 46. The sensor 52 is, for example, a proximity sensor, and detects the detection plate 51 which is displaced according to the movement of the fixed clutch tooth 46. Specifically, the sensor 52 detects whether the detection plate 51 is positioned close to the sensor 52 or whether the detection plate 51 is positioned far from the sensor 52. When the sensor 52 detects that the detection plate 51 is positioned close to the sensor 52, it can be determined that the fixed clutch tooth 46 is positioned on the second clutch tooth 48 side, that is, in the second mode described later. When the sensor 52 detects that the detection plate 51 is positioned far from the sensor 52, it can be determined that the fixed clutch tooth 46 is positioned on the first clutch tooth 47 side, that is, in the first mode described later.

As a feature of the present embodiment, the fixed clutch tooth 46 has three operation modes as switchable operation modes. As illustrated in FIGS. 5A to 5C, the three operation modes include the first mode, the second mode, and the both-engaging mode.

As illustrated in FIG. 5B, the first mode is a mode in which the fixed clutch tooth 46 meshes only with the first clutch tooth 47. In the first mode, the plurality of first engaging teeth 46a of the fixed clutch tooth 46 and the plurality of third engaging teeth 47a of the first clutch tooth 47 mesh with each other. In contrast, the plurality of second engaging teeth 46b of the fixed clutch tooth 46 and the plurality of fourth engaging teeth 48a of the second clutch tooth 48 are released. The first clutch tooth 47 is fixed when the fixed clutch tooth 46 meshes with the first clutch tooth 47, thereby restricting the rotation of the first internal gear 38. In this case, the speed reducer 31 operates at a large reduction ratio (second reduction ratio) .

As illustrated in FIG. 5A, the second mode is a mode in which the fixed clutch tooth 46 meshes only with the second clutch tooth 48. In the second mode, the plurality of second engaging teeth 46b of the fixed clutch tooth 46 and the plurality of fourth engaging teeth 48a of the second clutch tooth 48 mesh with each other. In contrast, the plurality of first engaging teeth 46a of the fixed clutch tooth 46 and the plurality of third engaging teeth 47a of the first clutch tooth 47 are released. The second clutch tooth 48 is fixed when the fixed clutch tooth 46 meshes with the second clutch tooth 48, thereby restricting the rotation of the planetary carrier 34. In this case, the speed reducer 31 operates at a reduction ratio (first reduction ratio) smaller than the second reduction ratio.

As illustrated in FIG. 5C, the both-engaging mode is a mode that operates when a mode of the fixed clutch tooth 46 changes from the first mode to the second mode, or conversely, when a mode of the fixed clutch tooth 46 changes from the second mode to the first mode. In the both-engaging mode, the fixed clutch tooth 46 meshes with each of the first clutch tooth 47 and the second clutch tooth 48. In the both-engaging mode, the plurality of first engaging teeth 46a of the fixed clutch tooth 46 and the plurality of third engaging teeth 47a of the first clutch tooth 47 mesh with each other. Similarly, the plurality of second engaging teeth 46b of the fixed clutch tooth 46 and the plurality of fourth engaging teeth 48a of the second clutch tooth 48 mesh with each other. In this case, each of the first clutch tooth 47 and the second clutch tooth 48 is fixed, thereby restricting the rotation of the planetary carrier 34 and the first internal gear 38.

A table driving method for the press brake 1 according to the present embodiment will be described below with reference to FIGS. 1 and 2, and FIGS. 5A to 5C.

A workpiece is positioned between the upper tool P and the lower tool D. The control device 100 causes the solenoid 49 to perform an attracting operation. As a result, the fixed clutch tooth 46 moves toward the second clutch tooth 48 side, and thus the fixed clutch tooth 46 enters the second mode of meshing only with the second clutch tooth 48 (FIG. 5A).

The control device 100 operates the electric motor 25 to rotate the electric motor shaft 26 forward. In the second mode, the planetary carrier 34 is fixed, but the first internal gear 38 is released. Since the planetary carrier 34 is fixed, the first planetary gear 33a meshing with the first internal gear 38 rotates without revolving according to the rotation of the sun gear 32, which rotates integrally with the electric motor shaft 26. Meanwhile, since the rotation of the first planetary gear 33a also causes the second planetary gear 33b to rotate integrally with the first planetary gear 33a, the second internal gear 40 also rotates according to the rotation of the second planetary gear 33b. As a result, the output unit 41 coupled with the second internal gear 40 also rotates synchronously. At this time, the rotation of the electric motor shaft 26 is output to the output unit 41 as a simple planetary gear mechanism without being decelerated by the mechanical paradox planetary gear mechanism. That is, the reduction ratio of the speed reducer 31 enters the first reduction ratio. Therefore, an output of the high-speed low torque is output to the output unit 41, and the upper table 7 descends at high speed.

When the upper table 7 has descended to a predetermined switching position, the control device 100 stops the rotation of the electric motor shaft 26. Thereafter, the control device 100 terminates the attracting operation of the solenoid 49. As a result, the fixed clutch tooth 46 moves toward the first clutch tooth 47 side, and thus the fixed clutch tooth 46 enters the first mode of meshing only with the first clutch tooth 47 (FIG. 5B).

Thereafter, the control device 100 operates the electric motor 25 to rotate the electric motor shaft 26 backward. In the first mode, the first internal gear 38 is fixed, but the planetary carrier 34 is released. Therefore, the first planetary gear 33a that is engaged with the first internal gear 38 revolves around the sun gear 32 rotating integrally with the electric motor shaft 26 while rotating. Since the rotation of the first planetary gear 33a also causes the second planetary gear 33b to rotate integrally with the first planetary gear 33a, the rotation of the second planetary gear 33b also rotates the second internal gear 40 having the different number of teeth from those of the first internal gear 38. As a result, the output unit 41 coupled with the second internal gear 40 also rotates synchronously. At this time, the rotation of the electric motor shaft 26 is substantially decelerated by the mechanical paradox planetary gear mechanism, and is output to the output unit 41. That is, the reduction ratio of the speed reducer 31 enters the second reduction ratio which is larger than the first reduction ratio. Therefore, an output of the low-speed high torque is output to the output unit 41, and the upper table 7 descends at low speed.

When the upper table 7 has reached a predetermined pressure position, the workpiece is bent by the upper tool P and the lower tool D with a large force, and is bent to a desired angle.

After stopping the electric motor shaft 26 from rotating backward, the control device 100 rotates the electric motor shaft 26 forward. At this time, the rotation of the electric motor shaft 26 is substantially decelerated by the mechanical paradox planetary gear mechanism, and is output to the output unit 41. As a result, the upper table 7 ascends at low speed.

When the upper table 7 has ascended to a predetermined switching position, the control device 100 stops the rotation of the electric motor shaft 26. Thereafter, the control device 100 causes the solenoid 49 to perform an attracting operation. As a result, the fixed clutch tooth 46 moves toward the second clutch tooth 48 side, and thus the fixed clutch tooth 46 enters the second mode of meshing only with the second clutch tooth 48.

The control device 100 operates the electric motor 25 to rotate the electric motor shaft 26 backward. At this time, the rotation of the electric motor shaft 26 is output to the output unit 41 as a simple planetary gear mechanism without being decelerated by the mechanical paradox planetary gear mechanism. As a result, the upper table 7 ascends at high speed.

Finally, when the upper table 7 has moved to a predetermined ascending end, the control device 100 stops the rotation of the electric motor shaft 26. Through the operation described above, a series of bending steps is completed.

In the series of steps described above, when a mode of the fixed clutch tooth 46 changes between the first mode and the second mode, the fixed clutch tooth 46 operates in the both-engaging mode. Therefore, at the time of switching the fixed clutch tooth 46, each of the planetary carrier 34 and the first internal gear 38 is fixed. Although the upper table 7, which is a heavy body, receives a large downward force due to its own weight, since the rotation of the planetary carrier 34 and the first internal gear 38 is restricted, the upper table 7 is maintained in an immovable state.

Thus, according to the present embodiment, since the speed reducer 31 includes the mechanical paradox planetary gear mechanism, a sufficiently large reduction ratio (second reduction ratio) can be acquired. Thus, the operation performance required for the press brake 1 can be sufficiently acquired. Further, the fixed clutch tooth 46 operates in the both-engaging mode when changing the mode between the first mode and the second mode. Accordingly, the upper table 7, which is a heavy body, is maintained in an immovable state, and thus the upper table 7 can be prevented from descending unexpectedly.

Here, a clutch structure described in Patent Literature 1 will be described as a comparative example. In the clutch structure according to the comparative example, the reduction ratio on the high-speed side and the reduction ratio on the low-speed side are switched by the up-down movement of the clutch cylinder. In the clutch structure, the gear trains (A-side gear train and B-side gear train) constituted of a group of the first to third gears are provided at the two upper and lower positions, and the engaging gears (A-side engaging gear and B-side engaging gear) are provided in the clutch cylinder at the two upper and lower positions corresponding to the gear trains at the two upper and lower gear positions. At the time of switching the clutch cylinder, each of the engaging gears switches the gear to be meshed with the engaging gear from among a group of the gears constituting the corresponding gear trains. That is, at the time of switching the clutch, a case occurs in which each of the lower and upper engaging gears meshes with a new gear. In order to smoothly switch the clutch cylinder, a certain amount of clearance is required between the teeth of the engaging gears and the teeth of the gears on the gear train side when viewed in the circumferential direction. However, when the clutch is switched, the gear may rotate by the amount of the clearance, and thus the upper table 7 may descend according to the rotation of the gear.

In this respect, in the clutch 45 according to the present embodiment, when switching the fixed clutch tooth 46, there is only one clutch tooth (the first clutch tooth 47 or the second clutch tooth 48) with which the fixed clutch tooth 46 newly meshes. Therefore, the clutch 45 according to the present embodiment makes it possible to reduce the clearance in size required between the engaging teeth compared to the structure of the comparative example in which the engaging gears mesh with two respective gears. This makes it possible to prevent the upper table 7 from descending in a more positive way.

In the present embodiment, the speed reducer 31 includes: the sun gear 32 that rotates integrally with the electric motor shaft 26; a plurality of planetary gear units 33 having the first planetary gear 33a that is engaged with the sun gear 32 and rotates according to a rotation of the sun gear 32, and the second planetary gear 33b that is provided coaxially with the first planetary gear 33a and rotates integrally with the first planetary gear 33a; the planetary carrier 34 as the second rotation element that rotatably supports the plurality of planetary gear units 33 and rotates around the electric motor shaft 26; the first internal gear 38 as the first rotation element that is engaged with the first planetary gear 33a; the second internal gear 40 that has the number of teeth different from those of the first internal gear 38 and is engaged with the second planetary gear 33b; and the output unit 41 that is connected to the ball screw mechanism 55 and rotates integrally with the second internal gear 40.

This structure makes it possible for the speed reducer 31 to output the rotation of the electric motor shaft 26 to the output unit 41 as a simple planetary gear mechanism (first reduction ratio), or to the output unit 41 as a mechanical paradox planetary gear mechanism (second reduction ratio). Accordingly, a sufficiently large second reduction ratio can be acquired compared to the first reduction ratio, and thus the operation performance required for the press brake 1 can be sufficiently acquired.

In the present embodiment, the fixed clutch tooth 46 is an annular member having a plurality of first engaging teeth 46a, each of which projects toward the first clutch tooth 47 side, and a plurality of second engaging teeth 46b, each of which projects toward the second clutch tooth 48 side, provided along the circumferential direction. The first clutch tooth 47 is an annular member having a plurality of third engaging teeth 47a, each of which projects toward the second clutch tooth 48 side, provided along the circumferential direction. The second clutch tooth 48 is an annular member having a plurality of fourth engaging teeth 48a, each of which projects toward the first clutch tooth 47 side, provided along the circumferential direction.

According to this structure, since the engaging teeth opposed to each other are configured to engage with each other, the engagement with the first clutch tooth 47 or the second clutch tooth 48 can be easily performed by moving the fixed clutch tooth 46 in the up-down direction. Further, since the fixed clutch tooth 46 is positioned between the first clutch tooth 47 and the second clutch tooth 48, an area can be set where the fixed clutch tooth 46 is engaged with both the first clutch tooth 47 and the second clutch tooth 48. Thus, when a mode of the fixed clutch tooth 46 changes between the first mode and the second mode, the fixed clutch tooth 46 can be operated in the both-engaging mode.

In the present embodiment, in the first mode, a rotation of the first internal gear 38 is restricted in a state in which the plurality of first engaging teeth 46a and the plurality of third engaging teeth 47a mesh with each other, and the plurality of second engaging teeth 46b and the plurality of fourth engaging teeth 48a are released. In the second mode, a rotation of the planetary carrier 34 is restricted in a state in which the plurality of second engaging teeth 46b and the plurality of fourth engaging teeth 48a mesh with each other, and the plurality of first engaging teeth 46a and the plurality of third engaging teeth 47a are released. In the both-engaging mode, the plurality of first engaging teeth 46a and the plurality of third engaging teeth 47a mesh with each other and the plurality of second engaging teeth 46b and the plurality of fourth engaging teeth 48a mesh with each other, thereby restricting a rotation of the first internal gear 38 and the planetary carrier 43.

This structure makes it possible to acquire a sufficiently large second reduction ratio in the first mode compared to the first reduction ratio acting in the second mode. Thus, the operation performance required for the press brake 1 can be sufficiently acquired. The fixed clutch tooth 46 restricts the rotation of the first internal gear 38 and the planetary carrier 43 when changing the mode between the first mode and the second mode. Accordingly, the upper table 7, which is a heavy body, is maintained in an immovable state, and thus the upper table 7 can be prevented from descending unexpectedly.

In the present embodiment, the clutch 45 further includes: the pressing member that presses the fixed clutch tooth 46 toward the first clutch tooth 47 side; and the solenoid 49 that moves the fixed clutch tooth 46 that is pressed toward the first clutch tooth 47 side by the pressing member toward the second clutch tooth 48 side by attracting the fixed clutch tooth 46 using an electromagnetic force.

This structure makes it possible to drive the fixed clutch tooth 46 by utilizing the magnetic attraction of the solenoid 49 and the pressing force of the pressing member. This makes it possible to easily perform switching between the first mode and the second mode.

In the present embodiment, the press brake 1 further includes: the detection device 50 that detects a position of the fixed clutch tooth 46 between the first clutch tooth 47 and the second clutch tooth 48; and the control device 100 that controls the clutch 45 and the electric motor 25 based on a detection result of the detection device 50.

This structure makes it possible for the control device 100 to appropriately control the clutch 45 and the electric motor 25, while referring to the position of the fixed clutch tooth 46.

In the present embodiment, the detection device 50 includes: the detection plate 51 that is fixed to the fixed clutch tooth 46 and extended to the outside of the housing for housing the clutch 45; and the sensor 52 that is disposed outside the housing and detects the detection plate 51.

According to this structure, the detection plate 51 moves up and down in synchronization with the movement of the fixed clutch tooth 46. By detecting the detection plate 51 using the sensor 52, the position of the fixed clutch tooth 46, that is, the mode in which the fixed clutch tooth 46 is, can be detected.

In the present embodiment, the clutch 45 further includes a capacitor that supplies power to the solenoid 49 when external power to the solenoid 49 is interrupted.

According to this structure, the electric power for exciting the solenoid 49 can be supplied by the capacitor. Since the movement of the fixed clutch tooth 46 on the second clutch tooth 48 side can be prevented from moving toward the first clutch tooth 47 when the power source is lost, a case can be prevented in which the clutch 45 is damaged due to interference between the engaging teeth.

### (Second Embodiment)

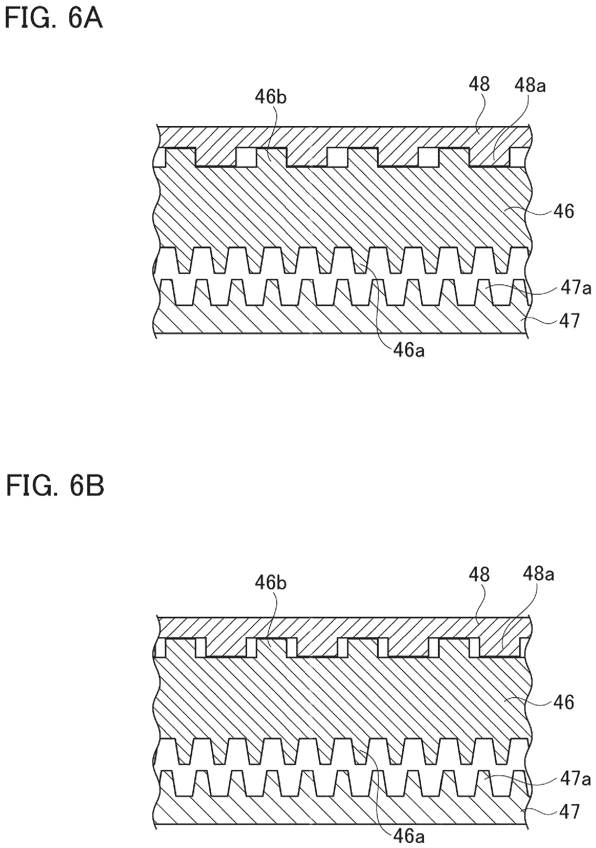

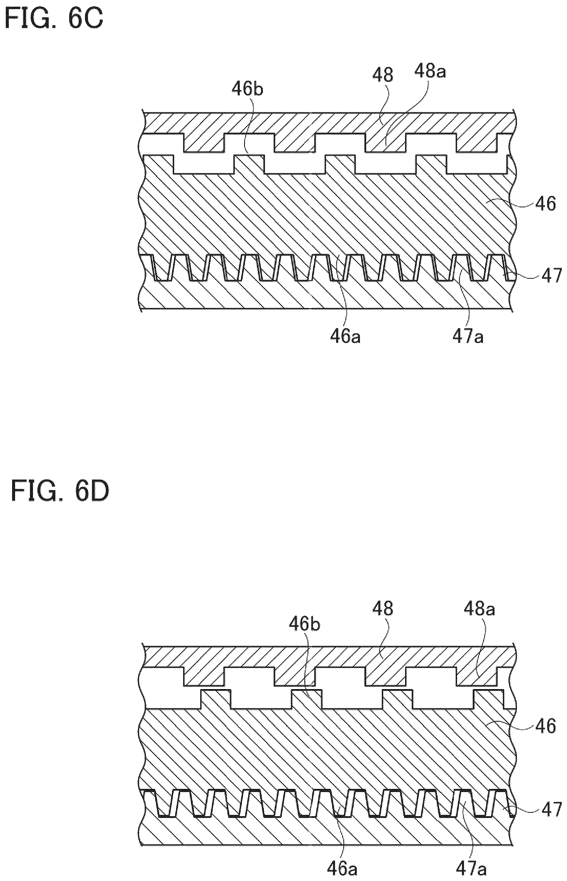

A press brake 1 according to a second embodiment will be described below. One of the features of the press brake 1 according to the second embodiment is a method of controlling the clutch 45 when changing a mode between the first mode and the second mode. Hereinafter, the method of controlling the clutch 45 will be described below with reference to FIGS. 6A to 6D. Here, FIGS. 6A to 6D are diagrams for explaining the method of controlling the clutch according to the second embodiment.

In the following description, a case will be assumed in which a mode of the fixed clutch tooth 46 is switched from the second mode to the first mode. When stopping the rotation of the electric motor shaft 26 of the electric motor 25, a force for rotating the second clutch tooth 48 in the circumferential direction acts due to the weight of the upper table 7. As a result, as illustrated in FIG. 6A, the plurality of second engaging teeth 46b of the fixed clutch tooth 46 and the plurality of fourth engaging teeth 48a of the second clutch tooth 48 are in close contact with each other in the circumferential direction.

For this reason, even when the attracting operation of the solenoid 49 is terminated, the fixed clutch tooth 46 and the second clutch tooth 48 will wear out due to the frictional force between the fixed clutch tooth 46 and the second clutch tooth 48. Moreover, in some cases, a mode of the fixed clutch tooth 46 may not be changed to the first mode in a normal manner.

Therefore, the control device 100 slightly rotates the electric motor shaft 26 of the electric motor 25 in the direction in which the upper table 7 ascends. As the second clutch tooth 48 rotates, a clearance can be provided between the second engaging teeth 46b and the fourth engaging teeth 48a as illustrated in FIG. 6B.

Accordingly, as illustrated in FIG. 6C, the fixed clutch tooth 46 can move toward the first clutch tooth 47 side, and thus a mode of the fixed clutch tooth 46 can be changed to the first mode. When a mode of the fixed clutch tooth 46 has changed to the first mode, a force for rotating the first clutch tooth 47 in the circumferential direction (the direction opposite to that in FIG. 6A) acts due to the weight of the upper table 7. The plurality of first engaging teeth 46a of the fixed clutch tooth 46 and the plurality of third engaging teeth 47a of the first clutch tooth 47 are in close contact with each other in the circumferential direction.

As described above, in the present embodiment, the control device 100 operates the electric motor 25 such that the upper table 7 ascends by a small amount when changing a mode between the first mode and the second mode.

This structure makes it possible to prevent the weight of the upper table 7 from acting on the respective engaging teeth when switching the fixed clutch tooth 46. This reduces wear on the engaging teeth, thereby increasing the life of the device.

In the above embodiment, a case has been described as an example in which a mode of the fixed clutch tooth 46 is switched from the second mode to the first mode. However, this control method can be applied even in a case in which a mode of the fixed clutch tooth 46 is switched from the first mode to the second mode.

### (Third Embodiment)

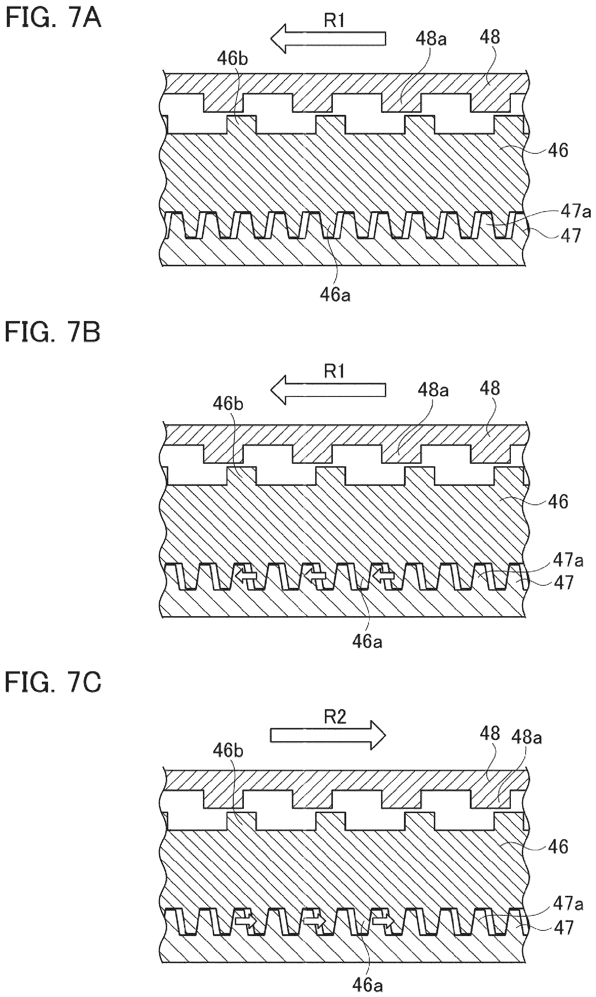

Hereinafter, a press brake 1 according to a third embodiment will be described. One of the features of the press brake 1 according to the third embodiment is a method of controlling the clutch 45 when changing a mode between the first mode and the second mode. Hereinafter, the method of controlling the clutch 45 will be described with reference to FIGS. 7A to 7C. Here, FIGS. 7A to 7C are diagrams for explaining the method of controlling the clutch according to the third embodiment.

In the following description, a case will be assumed in which a mode of the fixed clutch tooth 46 is switched from the first mode to the second mode. As illustrated in FIG. 7A, when changing a mode of the fixed clutch tooth 46 to the second mode, the tooth tips of the fourth engaging teeth 48a of the second clutch tooth 48 and the tooth tips of the second engaging teeth 46b of the fixed clutch tooth 46 may interfere with each other depending on the positional relationship between the second clutch tooth 48 and the fixed clutch tooth 46. In this case, a case occurs in which a mode of the fixed clutch tooth 46 cannot be changed to the second mode.

Therefore, before switching the mode from the first mode to the second mode, the control device 100 performs control (first control) to rotate the electric motor shaft 26 of the electric motor 25 in the rotational direction R1 by a predetermined rotational angle. The rotational angle in performing the control corresponds to an angle at which the second clutch tooth 48 positioned on the side where the fixed clutch tooth 46 moves rotates by a width corresponding to one tooth of the second clutch tooth 48 (the width of the fourth engaging teeth 48a). The rotational position of the fourth engaging teeth 48a of the second clutch tooth 48, that is, the tooth phase, is detected by a phase sensor such as a phototransistor. The control device 100 can rotate the second clutch tooth 48 by a width corresponding to one tooth in the predetermined rotational direction R1 based on the detection result of the phase sensor. Accordingly, the phase of the second clutch tooth 48 and the fixed clutch tooth 46 is shifted, and thus the tooth tips of the second engaging teeth 46b of the fixed clutch tooth 46 fit with the tooth gaps between the fourth engaging teeth 48a of the second clutch tooth 48. As a result, a mode of the fixed clutch tooth 46 can be changed to the second mode.

However, as illustrated in FIG. 7B, when the second clutch tooth 48 rotates in the rotational direction R1, a rotational force in the rotational direction R1 also acts on the first clutch tooth 47. At this time, if the first engaging teeth 46a of the fixed clutch tooth 46 are adjacent to the third engaging teeth 47a of the first clutch tooth 47 in the rotational direction R1 side, the third engaging teeth 47a are pressed against the first engaging teeth 46a. For this reason, a mode of the fixed clutch tooth 46 may not be changed to the second mode in a normal manner due to a frictional force generated between the fixed clutch tooth 46 and the first clutch tooth 47.

Therefore, when a mode of the fixed clutch tooth 46 is not switched from the first mode to the second mode even though the first control is performed, the control device 100 performs control (second control) to rotate the electric motor shaft 26 of the electric motor 25 in the backward rotation direction R2 by a predetermined rotation angle (a rotation angle corresponding to the width of one tooth). As a result, a clearance is generated between the third engaging teeth 47a of the first clutch tooth 47 and the first engaging teeth 46a of the fixed clutch tooth 46, and thus a mode of the fixed clutch tooth 46 can be changed from the first mode to the second mode.

As described above, in the present embodiment, the control device 100 performs the first control to control the electric motor 25 such that the clutch tooth 47 and the clutch tooth 48 positioned on the side where the fixed clutch tooth 46 is switched rotate by a width corresponding to one tooth when changing a mode between the first mode and the second mode.

This structure makes it possible to reduce the amount and time of movement of the upper table 7 in the upward direction or downward direction, since the amount of rotation of the clutch tooth 47 and the clutch tooth 48 is required to be small in performing a change of the mode. As a result, the time required for a change of the mode can be shortened.

In addition, in the present embodiment, the control device 100 performs the second control to control the electric motor 25 such that the clutch tooth 47 and the clutch tooth 48 rotate by a width corresponding to one tooth in a direction opposite to the first control, in a case where a mode cannot be changed between the first mode and the second mode even when performing the first control.

This structure makes it possible to change the mode reliably between the first mode and the second mode.

In the embodiment described above, the case has been described as an example in which a mode of the fixed clutch tooth 46 is switched from the first mode to the second mode. However, this control method can be applied even in a case in which a mode of the fixed clutch tooth 46 is switched from the second mode to the first mode.

In each of the embodiments described above, the rotation shafts of the electric motor 25 and the speed reducer unit 30 are arranged coaxially with the rotation shaft of the ball screw mechanism 55. However, the structure may be such that the rotation shafts of the electric motor 25 and the speed reducer unit 30 are arranged in parallel according to the rotation shaft of the ball screw mechanism 55, and the output unit 41 of the speed reducer unit 30 and the ball screw nut 56 of the ball screw mechanism 55 are connected by a timing belt to transmit power. This structure makes it possible to reduce the size in the up-down direction.

In each of the embodiments described above, the upper table 7 has been described as a movable table; however, the lower table 5 may be a movable table.

One of the features of the present embodiment is the structure of the press brake 1, and the table driving method for the press brake 1 described above is also given as one of the features of the present embodiment. That is, when driving the movable table in either the upward direction or the downward direction, the table driving method for the press brake 1 performs: a first step of operating the speed reducer at the second reduction ratio by meshing the fixed clutch tooth 46 only with the first clutch tooth 47 to fix the first rotation element; a second step of operating the speed reducer at the first reduction ratio by meshing the fixed clutch tooth 46 only with the second clutch tooth 48 to fix the second rotation element; and a third step of meshing the fixed clutch tooth 46 with each of the first clutch tooth 47 and the second clutch tooth 48 when changing a step between the first step and the second step.

According to the above method, since the speed reducer 31 includes the mechanical paradox planetary gear mechanism, a sufficiently large second reduction ratio can be acquired compared to the first reduction ratio. Accordingly, the operation performance required for the press brake 1 can be sufficiently acquired. Further, the fixed clutch tooth 46 operates in the both-engaging mode when changing a mode between the first mode and the second mode. Accordingly, the upper table 7, which is a heavy body, is maintained in an immovable state, and thus the upper table 7 can be prevented from descending unexpectedly.

The embodiments of the present disclosure have been described above, but the statements and drawings forming part of this disclosure should not be understood as limiting the invention.

The disclosure of the present application relates to the subject matters described in Japanese Patent Application No. 2022-66193 filed on April 13, 2022

## Claims

1. A press brake (1) comprising:
a movable table (7) that is disposed opposite to a fixed table (5) in an up-down direction;
a conversion mechanism (55) configured to move the movable table (7) in the up-down direction by converting a rotation motion into a linear motion;
an electric motor (25) provided with an electric motor shaft (26);
a speed reducer (31) that includes a mechanical paradox planetary gear mechanism, and configured to output a rotation of the electric motor shaft (26) to the conversion mechanism (55) by reducing the rotation of the electric motor shaft (26) at either a first reduction ratio or a second reduction ratio larger than the first reduction ratio; and
a clutch (45) configured to switch a reduction ratio in the speed reducer (31) between the first reduction ratio and the second reduction ratio,
wherein the clutch (45) includes:
a first clutch tooth (47) that is connected to a first rotation element included in the speed reducer (31) and configured to rotate integrally with the first rotation element;
a second clutch tooth (48) that is connected to a second rotation element included in the speed reducer (31) and configured to rotate integrally with the second rotation element; and
a fixed clutch tooth (46) that is provided between the first clutch tooth (47) and the second clutch tooth (48) disposed to be opposite to each other such that a tooth structure of the first clutch tooth (47) and a tooth structure of the second clutch tooth (48) face each other, and configured to move between the first clutch tooth (47) and the second clutch tooth (48), and
the fixed clutch tooth (46) includes: as a switchable operation mode,
a first mode in which the speed reducer (31) operates at the second reduction ratio by meshing only with the first clutch tooth (47) to fix the first rotation element;
a second mode in which the speed reducer (31) operates at the first reduction ratio by meshing only with the second clutch tooth (48) to fix the second rotation element;
**characterized in that** the fixed clutch tooth includes
a both-engaging mode of meshing with each of the first clutch tooth (47) and the second clutch tooth (48) when changing a mode between the first mode and the second mode.

2. The press brake (1) according to claim 1, wherein the speed reducer (31) includes:
a sun gear (32) configured to rotate integrally with the electric motor shaft (26);
a plurality of planetary gear units (33) having a first planetary gear (33a) that is engaged with the sun gear (32) and configured to rotate according to a rotation of the sun gear (32), and a second planetary gear (32b) that is provided coaxially with the first planetary gear (33a) and is configured to rotate integrally with the first planetary gear (33a);
a planetary carrier (34) as the second rotation element that rotatably supports the plurality of planetary gear units (33) and configured to rotate around the electric motor shaft (26) ;
a first internal gear (38) as the first rotation element that is engaged with the first planetary gear (33a);
a second internal gear (40) that has the number of teeth different from those of the first internal gear (38) and is engaged with the second planetary gear (33b); and
an output unit (41) that is connected to the conversion mechanism (55) and configured to rotate integrally with the second internal gear (40).

3. The press brake (1) according to claim 2, wherein
the fixed clutch tooth (46) is an annular member having a plurality of first engaging teeth (46a), each of which projects toward the first clutch tooth (47) side, and a plurality of second engaging teeth (46b), each of which projects toward the second clutch tooth (48) side, provided along a circumferential direction,
the first clutch tooth (47) is an annular member having a plurality of third engaging teeth (47a), each of which projects toward the second clutch tooth (48) side, provided along the circumferential direction, and
the second clutch tooth (48) is an annular member having a plurality of fourth engaging teeth (48a), each of which projects toward the first clutch tooth (47) side, provided along the circumferential direction.

4. The press brake (1) according to claim 3, wherein
in the first mode, a rotation of the first internal gear (38) is restricted in a state in which the plurality of first engaging teeth (46a) and the plurality of third engaging teeth (47a) mesh with each other, and the plurality of second engaging teeth (46b) and the plurality of fourth engaging teeth (48a) are released,
in the second mode, a rotation of the planetary carrier (34) is restricted in a state in which the plurality of second engaging teeth (46b) and the plurality of fourth engaging teeth (48a) mesh with each other, and the plurality of first engaging teeth (46a) and the plurality of third engaging teeth (47a) are released, and
in the both-engaging mode, the plurality of first engaging teeth (46a) and the plurality of third engaging teeth (47a) mesh with each other and the plurality of second engaging teeth (46b) and the plurality of fourth engaging teeth (48a) mesh with each other, thereby restricting a rotation of the first internal gear (38) and the planetary carrier (34).

5. The press brake (1) according to claim 1, wherein
the clutch (45) further includes:
a pressing member configured to press the fixed clutch tooth (46) toward the first clutch tooth (47) side; and
a solenoid (49) configured to move the fixed clutch tooth (46) that is pressed toward the first clutch tooth (47) side by the pressing member toward the second clutch tooth (48) side by attracting the fixed clutch tooth (46) using an electromagnetic force.

6. The press brake (1) according to any one of claims 1 to 5, further comprising:
a detection device (50) that is configured to detect a position of the fixed clutch tooth (46) between the first clutch tooth (47) and the second clutch tooth (48); and
a control device (100) that is configured to control the clutch (45) and the electric motor (25) based on a detection result of the detection device (50).

7. The press brake (1) according to claim 6, wherein the control device (100) is configured to operate the electric motor
(25) such that the movable table (7) ascends by a small amount when changing a mode between the first mode and the second mode.

8. The press brake (1) according to claim 6, wherein the control device (100) is configured to perform a first control to control the electric motor (25) such that a clutch tooth positioned on a side where the fixed clutch tooth (46) is switched rotates by a width corresponding to one tooth when changing a mode between the first mode and the second mode.

9. The press brake (1) according to claim 8, wherein the control device (100) is configured to perform a second control to control the electric motor (25) such that the clutch tooth rotates by a width corresponding to one tooth in a direction opposite to the first control, in a case where a mode is not changed between the first mode and the second mode even when performing the first control.

10. The press brake (1) according to claim 6, wherein
the detection device (50) includes:
a detection plate (51) that is fixed to the fixed clutch tooth (46) and extended to an outside of a housing for housing the clutch (45); and
a sensor (52) that is disposed outside the housing and is configured to detect the detection plate (51).

11. The press brake (1) according to claim 5, wherein the clutch (45) further includes a capacitor that is configured to supply
power to the solenoid (49) when external power to the solenoid (49) is interrupted.

12. A table driving method for a press brake (1), the press brake (1) comprising:
a fixed table (5);
a movable table (7) that is disposed opposite to the fixed table (5) in an up-down direction;
an electric motor (25) provided with an electric motor shaft (26);
a speed reducer (31) that includes a mechanical paradox planetary gear mechanism, and outputs a rotation of the electric motor shaft (26) by reducing the rotation of the electric motor shaft (26) at either a first reduction ratio or a second reduction ratio larger than the first reduction ratio; and
a clutch (45) that switches a reduction ratio in the speed reducer (31) between the first reduction ratio and the second reduction ratio; and
a conversion mechanism (55) that moves the movable table (7) in the up-down direction by converting a rotation motion transmitted from the speed reducer (31) into a linear motion,
wherein the clutch (45) includes:
a first clutch tooth (47) that is connected to a first rotation element included in the speed reducer (31) and rotates integrally with the first rotation element;
a second clutch tooth (48) that is connected to a second rotation element included in the speed reducer (31) and rotates integrally with the second rotation element; and
a fixed clutch tooth (46) that is provided between the first clutch tooth (47) and the second clutch tooth (48) disposed to be opposite to each other such that a tooth structure of the first clutch tooth (47) and a tooth structure of the second clutch tooth (48) face each other, and moves between the first clutch tooth (47) and the second clutch tooth (48), and
when driving the movable table (7) in either an upward direction or a downward direction,
the table driving method for the press brake (1) includes:
a first step of operating the speed reducer (31) at the second reduction ratio by meshing the fixed clutch tooth (46) only with the first clutch tooth (47) to fix the first rotation element;
a second step of operating the speed reducer (31) at the first reduction ratio by meshing the fixed clutch tooth (46) only with the second clutch tooth (48) to fix the second rotation element; **characterized in that** the table driving method for the press brake includes
a third step of meshing the fixed clutch tooth (46) with each of the first clutch tooth (47) and the second clutch tooth (48) when changing a step between the first step and the second step.

## Patentansprüche

1. Eine Abkantpresse (1) mit:
einen beweglichen Tisch (7), der in Oben-Unten-Richtung gegenüber einem feststehenden Tisch (5) angeordnet ist;
einen Umwandlungsmechanismus (55), der konfiguriert ist, den beweglichen Tisch (7) in Oben-Unten-Richtung zu bewegen, indem er eine Drehbewegung in eine lineare Bewegung umwandelt;
einen Elektromotor (25), der mit einer Elektromotorwelle (26) versehen ist;
einem Drehzahlminderer (31), der einen mechanischen Paradox-Planetengetriebemechanismus umfasst und konfiguriert ist, eine Drehung der Elektromotorwelle (26) an den Umwandlungsmechanismus (55) auszugeben, indem er die Drehung der Elektromotorwelle (26) entweder mit einem ersten Untersetzungsverhältnis oder einem zweiten Untersetzungsverhältnis, das größer als das erste Untersetzungsverhältnis ist, reduziert; und
eine Kupplung (45), die konfiguriert ist, ein Untersetzungsverhältnis im Drehzahlminderer (31) zwischen dem ersten Untersetzungsverhältnis und dem zweiten Untersetzungsverhältnis umzuschalten, wobei die Kupplung (45) umfasst:
einen ersten Kupplungszahn (47), der mit einem ersten Drehelement verbunden ist, das in dem Drehzahlminderer (31) enthalten ist, und der konfiguriert ist, sich integral mit dem ersten Drehelement zu drehen;
einen zweiten Kupplungszahn (48), der mit einem zweiten Drehelement verbunden ist, das im Drehzahlminderer (31) enthalten ist, und konfiguriert ist, sich integral mit dem zweiten Drehelement zu drehen; und
einen feststehenden Kupplungszahn (46), der zwischen dem ersten Kupplungszahn (47) und dem zweiten Kupplungszahn (48) angeordnet ist, die einander gegenüberliegend angeordnet sind, so dass eine Zahnstruktur des ersten Kupplungszahns (47) und eine Zahnstruktur des zweiten Kupplungszahns (48) einander zugewandt sind, und der konfiguriert ist, sich zwischen dem ersten Kupplungszahn (47) und dem zweiten Kupplungszahn (48) zu bewegen, und
wobei der feststehende Kupplungszahn (46) umfasst: als umschaltbaren Betriebsmodus
einen ersten Modus, in dem der Drehzahlminderer (31) mit dem zweiten Untersetzungsverhältnis arbeitet, indem er nur mit dem ersten Kupplungszahn (47) in Eingriff steht, um das erste Drehelement zu fixieren; und
einen zweiten Modus, in dem der Drehzahlminderer (31) mit dem ersten Untersetzungsverhältnis arbeitet, indem er nur mit dem zweiten Kupplungszahn (48) in Eingriff steht, um das zweite Drehelement zu fixieren,
**dadurch gekennzeichnet, dass** der feststehende Kupplungszahn (46) außerdem umfasst
einen beidseitigen Eingriffsmodus, in dem sowohl der erste Kupplungszahn (47) als auch der zweite Kupplungszahn (48) in Eingriff gebracht werden, wenn zwischen dem ersten Modus und dem zweiten Modus umgeschaltet wird.

2. Die Abkantpresse (1) gemäß Anspruch 1, wobei
der Drehzahlminderer (31) umfasst:
ein Sonnenrad (32), das konfiguriert ist, sich integral mit der Elektromotorwelle (26) zu drehen;
mehrere Planetengetriebeeinheiten (33) mit einem ersten Planetenrad (33a), das mit dem Sonnenrad (32) in Eingriff steht und sich entsprechend der Drehung des Sonnenrads (32) dreht, und einem zweiten Planetenrad (32b), das koaxial zum ersten Planetenrad (33a) angeordnet ist und konfiguriert ist, sich integral mit dem ersten Planetenrad dreht (33a) zu drehen;
ein Planetenträger (34) als zweites Drehelement, der die mehreren Planetengetriebeeinheiten (33) drehbar lagert und konfiguriert ist, sich um die Elektromotorwelle (26) zu drehen;
ein erstes Innenzahnrad (38) als erstes Drehelement, das mit dem ersten Planetenrad (33a) in Eingriff steht;
ein zweites Innenzahnrad (40), das eine andere Anzahl von Zähnen als das erste Innenzahnrad (38) aufweist und mit dem zweiten Planetenrad (33b) in Eingriff steht; und
eine Ausgangseinheit (41), die mit dem Umwandlungsmechanismus (55) verbunden ist und konfiguriert ist, sich integral mit dem zweiten Innenzahnrad (40) zu drehen.

3. Die Abkantpresse (1) gemäß Anspruch 2, wobei
der feststehende Kupplungszahn (46) ein ringförmiges Element ist, das mehrere von ersten Eingriffszähnen (46a), von denen jeder zur Seite des ersten Kupplungszahns (47) hin vorsteht, und mehrere von zweiten Eingriffszähnen (46b), von denen jeder zur Seite des zweiten Kupplungszahns (48) hin vorsteht, aufweist, die entlang einer Umfangsrichtung angeordnet sind,
der erste Kupplungszahn (47) ein ringförmiges Element mit mehreren dritten Eingriffszähnen (47a) ist, von denen jeder in Richtung zur Seite des zweiten Kupplungszahns (48) vorsteht und entlang der Umfangsrichtung angeordnet ist, und
der zweite Kupplungszahn (48) ein ringförmiges Element mit mehreren vierten Eingriffszähnen (48a) ist, von denen jeder in Richtung zur Seite des ersten Kupplungszahns (47) vorsteht und entlang der Umfangsrichtung angeordnet ist.

4. Die Abkantpresse (1) gemäß Anspruch 3, wobei
im ersten Modus eine Drehung des ersten Innenzahnrads (38) in einem Zustand eingeschränkt ist, in dem die mehreren ersten Eingriffszähne (46a) und die mehreren dritten Eingriffszähne (47a) miteinander in Eingriff stehen und die mehreren zweiten Eingriffszähne (46b) und die mehreren vierten Eingriffszähne (48a) freigegeben sind,
im zweiten Modus die Drehung des Planetenträgers (34) in einem Zustand eingeschränkt ist, in dem die mehreren zweiten Eingriffszähne (46b) und die mehreren vierten Eingriffszähne (48a) miteinander in Eingriff stehen und die mehreren ersten Eingriffszähne (46a) und die mehreren dritten Eingriffszähne (47a) freigegeben sind, und
im beidseitigen Eingriffsmodus die mehreren ersten Eingriffszähne (46a) und die mehreren dritten Eingriffszähne (47a) miteinander in Eingriff stehen und die mehreren zweiten Eingriffszähne (46b) und die mehreren vierten Eingriffszähne (48a) miteinander in Eingriff stehen, wodurch eine Drehung des ersten Innenzahnrads (38) und des Planetenträgers (34) eingeschränkt wird.

5. Die Abkantpresse (1) gemäß Anspruch 1, wobei
die Kupplung (45) ferner umfasst:
ein Druckelement, das konfiguriert ist, den feststehenden Kupplungszahn (46) in Richtung der ersten Kupplungszahnseite (47) zu drücken; und
einen Elektromagneten (49), der konfiguriert ist, den feststehenden Kupplungszahn (46), der durch das Druckelement in Richtung der ersten Kupplungszahnseite (47) gedrückt wird, durch Anziehen des feststehenden Kupplungszahns (46) mit einer elektromagnetischen Kraft in Richtung der zweiten Kupplungszahnseite (48) zu bewegen.

6. Die Pressbremse (1) gemäß einem der Ansprüche 1 bis 5, die ferner umfasst:
eine Erfassungsvorrichtung (50), die konfiguriert ist, eine Position des feststehenden Kupplungszahns (46) zwischen dem ersten Kupplungszahn (47) und dem zweiten Kupplungszahn (48) zu erfassen; und
eine Steuervorrichtung (100), die konfiguriert ist, die Kupplung (45) und den Elektromotor (25) auf der Grundlage eines Erfassungsergebnisses der Erfassungsvorrichtung (50) zu steuern.

7. Die Abkantpresse (1) gemäß Anspruch 6, wobei
die Steuervorrichtung (100) konfiguriert ist, den Elektromotor (25) so zu betreiben, dass der bewegliche Tisch (7) beim Wechseln eines Modus zwischen dem ersten Modus und dem zweiten Modus um einen kleinen Betrag angehoben wird.

8. Die Abkantpresse (1) gemäß Anspruch 6, wobei
die Steuervorrichtung (100) konfiguriert ist, eine erste Steuerung durchzuführen, um den Elektromotor (25) so zu steuern, dass sich ein Kupplungszahn, der auf einer Seite positioniert ist, auf der der feststehende Kupplungszahn (46) geschaltet wird, beim Wechseln eines Modus zwischen dem ersten Modus und dem zweiten Modus um eine Breite dreht, die einem Zahn entspricht.

9. Die Abkantpresse (1) gemäß Anspruch 8, wobei
die Steuervorrichtung (100) konfiguriert ist, eine zweite Steuerung durchzuführen, um den Elektromotor (25) so zu steuern, dass sich der Kupplungszahn um eine Breite, die einem Zahn entspricht, in einer Richtung entgegengesetzt zur ersten Steuerung dreht, in einem Fall in dem ein Modus nicht zwischen dem ersten Modus und dem zweiten Modus gewechselt wird, selbst wenn die erste Steuerung durchgeführt wird.

10. Die Abkantpresse (1) gemäß Anspruch 6, wobei
die Erfassungsvorrichtung (50) umfasst:
eine Erfassungsplatte (51), die an dem feststehenden Kupplungszahn (46) befestigt ist und sich zu einer Außenseite eines Gehäuses zum Unterbringen der Kupplung (45) erstreckt; und
einen Sensor (52), der außerhalb des Gehäuses angeordnet ist und konfiguriert ist, die Erfassungsplatte (51) zu erfassen.

11. Die Abkantpresse (1) gemäß Anspruch 5, wobei
die Kupplung (45) ferner einen Kondensator umfasst, der konfiguriert ist, den Elektromagneten (49) mit Strom zu versorgen, wenn die externe Stromversorgung des Elektromagneten (49) unterbrochen ist.

12. Ein Tischantriebsverfahren für eine Abkantpresse (1), wobei die Abkantpresse (1) umfasst:
einen feststehenden Tisch (5);
einen beweglichen Tisch (7), der gegenüber dem feststehenden Tisch (5) in Oben-Unten-Richtung angeordnet ist;
einen Elektromotor (25), der mit einer Elektromotorwelle (26) versehen ist;
einem Drehzahlminderer (31), der einen mechanischen Paradox-Planetengetriebemechanismus umfasst und eine Drehung der Elektromotorwelle (26) ausgibt, indem er die Drehung der Elektromotorwelle (26) entweder mit einem ersten Untersetzungsverhältnis oder einem zweiten Untersetzungsverhältnis, das größer als das erste Untersetzungsverhältnis ist, reduziert; und
eine Kupplung (45), die ein Untersetzungsverhältnis im Drehzahlminderer (31) zwischen dem ersten Untersetzungsverhältnis und dem zweiten Untersetzungsverhältnis umschaltet; und
einen Umwandlungsmechanismus (55), der den beweglichen Tisch (7) in Oben-Unten-Richtung bewegt, indem er eine vom Drehzahlminderer (31) übertragene Drehbewegung in eine lineare Bewegung umwandelt, wobei die Kupplung (45) umfasst:
einen ersten Kupplungszahn (47), der mit einem ersten Drehelement verbunden ist, das in dem Drehzahlminderer (31) enthalten ist, und sich integral mit dem ersten Drehelement dreht;
einen zweiten Kupplungszahn (48), der mit einem zweiten Drehelement verbunden ist, das im Drehzahlminderer (31) enthalten ist, und sich integral mit dem zweiten Drehelement dreht; und
einen feststehenden Kupplungszahn (46), der zwischen dem ersten Kupplungszahn (47) und dem zweiten Kupplungszahn (48) angeordnet ist, die einander gegenüberliegend angeordnet sind, so dass eine Zahnstruktur des ersten Kupplungszahns (47) und eine Zahnstruktur des zweiten Kupplungszahns (48) einander zugewandt sind, und der sich zwischen dem ersten Kupplungszahn (47) und dem zweiten Kupplungszahn (48) bewegt, und
wenn der bewegliche Tisch (7) entweder in Aufwärtsrichtung oder in Abwärtsrichtung angetrieben wird, umfasst das Tischantriebsverfahren für die Abkantpresse (1):
einen ersten Schritt, bei dem der Drehzahlminderer (31) mit dem zweiten Untersetzungsverhältnis betrieben wird, indem nur der feststehende Kupplungszahn (46) mit dem ersten Kupplungszahn (47) in Eingriff gebracht wird, um das erste Drehelement zu fixieren; und
einen zweiten Schritt, bei dem der Drehzahlminderer (31) mit dem ersten Untersetzungsverhältnis betrieben wird, indem nur der feststehende Kupplungszahn (46) mit dem zweiten Kupplungszahn (48) in Eingriff gebracht wird, um das zweite Drehelement zu fixieren,
**dadurch gekennzeichnet, dass** das Tischantriebsverfahren für die Abkantpresse umfasst:
einen dritten Schritt, bei dem der feststehende Kupplungszahn (46) mit dem ersten Kupplungszahn (47) und dem zweiten Kupplungszahn (48) in Eingriff gebracht wird, wenn zwischen dem ersten Schritt und dem zweiten Schritt gewechselt wird.

## Revendications

1. Presse plieuse (1) comprenant :
une table mobile (7) qui est disposée à l'opposé d'une table fixe (5) dans une direction haut-bas ;
un mécanisme de conversion (55) configuré pour déplacer la table mobile (7) dans la direction haut-bas en convertissant un mouvement de rotation en un mouvement linéaire ;
un moteur électrique (25) équipé d'un arbre de moteur électrique (26) ;
un réducteur de vitesse (31) qui comporte un mécanisme d'engrenage planétaire paradoxal mécanique, et configuré pour délivrer en sortie une rotation de l'arbre de moteur électrique (26) vers le mécanisme de conversion (55) en réduisant la rotation de l'arbre de moteur électrique (26) selon un premier rapport de réduction ou un second rapport de réduction supérieur au premier rapport de réduction ; et
un embrayage (45) configuré pour commuter un rapport de réduction dans le réducteur de vitesse (31) entre le premier rapport de réduction et le second rapport de réduction, dans laquelle l'embrayage (45) comporte :
une première dent d'embrayage (47) qui est reliée à un premier élément de rotation intégré dans le réducteur de vitesse (31) et configurée pour tourner d'un seul tenant avec le premier élément de rotation ;
une deuxième dent d'embrayage (48) qui est reliée à un second élément de rotation intégré dans le réducteur de vitesse (31) et configurée pour tourner d'un seul tenant avec le second élément de rotation ; et
une dent d'embrayage fixe (46) qui est disposée entre la première dent d'embrayage (47) et la deuxième dent d'embrayage (48) disposées à être opposées l'une à l'autre de sorte qu'une structure de dent de la première dent d'embrayage (47) et une structure de dent de la deuxième dent d'embrayage (48) sont en vis-à-vis l'une de l'autre, et configurée pour se déplacer entre la première dent d'embrayage (47) et la deuxième dent d'embrayage (48), et
la dent d'embrayage fixe (46) comporte : en tant que mode de fonctionnement commutable,
un premier mode dans lequel le réducteur de vitesse (31) fonctionne au second rapport de réduction en s'engrenant uniquement avec la première dent d'embrayage (47) pour fixer le premier élément de rotation ;
un second mode dans lequel le réducteur de vitesse (31) fonctionne au premier rapport de réduction en s'engrenant uniquement avec la deuxième dent d'embrayage (48) pour fixer le second élément de rotation ;
**caractérisée en ce que** la dent d'embrayage fixe comporte un mode en prise avec les deux où elle s'engrène avec chacune de la première dent d'embrayage (47) et de la deuxième dent d'embrayage (48) lors d'un changement de mode entre le premier mode et le second mode.

2. Presse plieuse (1) selon la revendication 1, dans laquelle le réducteur de vitesse (31) comporte :
un engrenage solaire (32) configuré pour tourner d'un seul tenant avec l'arbre de moteur électrique (26) ;
une pluralité d'unités d'engrenages planétaires (33) ayant un premier engrenage planétaire (33a) qui est en prise avec l'engrenage solaire (32) et configuré pour tourner selon une rotation de l'engrenage solaire (32), et un second engrenage planétaire (32b) qui est disposé coaxialement avec le premier engrenage planétaire (33a) et est configuré pour tourner d'un seul tenant avec le premier engrenage planétaire (33a) ;
un support planétaire (34) en tant que second élément de rotation qui soutient de manière rotative la pluralité d'unités d'engrenages planétaires (33) et configuré pour tourner autour de l'arbre de moteur électrique (26) ;
un premier engrenage interne (38) en tant que premier élément de rotation qui est en prise avec le premier engrenage planétaire (33a) ;
un second engrenage interne (40) dont le nombre de dents diffère de celui du premier engrenage interne (38) et est en prise avec le second engrenage planétaire (33b) ; et une unité de sortie (41) qui est reliée au mécanisme de conversion (55) et configurée pour tourner d'un seul tenant avec le second engrenage interne (40).

3. Presse plieuse (1) selon la revendication 2, dans laquelle
la dent d'embrayage fixe (46) est un organe annulaire ayant une pluralité de premières dents de prise (46a), chacune faisant saillie vers le côté de la première dent d'embrayage (47), et une pluralité de deuxièmes dents de prise (46b), chacune faisant saillie vers le côté de la deuxième dent d'embrayage (48), disposées le long d'une direction circonférentielle,
la première dent d'embrayage (47) est un organe annulaire ayant une pluralité de troisième dents de prise (47a), chacune faisant saillie vers le côté de la deuxième dent d'embrayage (48), disposées le long de la direction circonférentielle, et
la deuxième dent d'embrayage (48) est un organe annulaire ayant une pluralité de quatrièmes dents de prise (48a), chacune faisant saillie vers le côté de la première dent d'embrayage (47), disposées le long de la direction circonférentielle.

4. Presse plieuse (1) selon la revendication 3, dans laquelle
dans le premier mode, une rotation du premier engrenage interne (38) est restreinte dans un état où la pluralité de premières dents de prise (46a) et la pluralité de troisièmes dents de prise (47a) s'engrènent ensemble, et la pluralité de deuxièmes dents de prise (46b) et la pluralité de quatrièmes dents de prise (48a) sont libérées, dans le second mode, une rotation du support planétaire (34) est restreinte dans un état où la pluralité de deuxièmes dents de prise (46b) et la pluralité de quatrièmes dents de prise (48a) s'engrènent ensemble, et la pluralité de premières dents de prise (46a) et la pluralité de troisièmes dents de prise (47a) sont libérées, et
dans le mode en prise avec les deux, la pluralité de premières dents de prise (46a) et la pluralité de troisièmes dents de prise (47a) s'engrènent ensemble et la pluralité de deuxièmes dents de prise (46b) et la pluralité de quatrièmes dents de prise (48a) s'engrènent ensemble, limitant ainsi une rotation du premier engrenage interne (38) et du support planétaire (34).

5. Presse plieuse (1) selon la revendication 1, dans laquelle l'embrayage (45) comporte en outre :
un organe de pressage configuré pour presser la dent d'embrayage fixe (46) vers le côté de la première dent d'embrayage (47) ; et
un solénoïde (49) configuré pour déplacer la dent d'embrayage fixe (46) qui est pressée vers le côté de la première dent d'embrayage (47) par l'organe de pressage vers le côté de la deuxième dent d'embrayage (48) en attirant la dent d'embrayage fixe (46) à l'aide d'une force électromagnétique.

6. Presse plieuse (1) selon l'une quelconque des revendications 1 à 5, comprenant en outre :
un dispositif de détection (50) qui est configuré pour détecter une position de la dent d'embrayage fixe (46) entre la première dent d'embrayage (47) et la deuxième dent d'embrayage (48) ; et
un dispositif de commande (100) qui est configuré pour commander l'embrayage (45) et le moteur électrique (25) sur la base d'un résultat de détection du dispositif de détection (50).

7. Presse plieuse (1) selon la revendication 6, dans laquelle
le dispositif de commande (100) est configuré pour faire fonctionner le moteur électrique (25) de sorte que la table mobile (7) monte d'une petite quantité lors d'un changement de mode entre le premier mode et le second mode.

8. Presse plieuse (1) selon la revendication 6, dans laquelle
le dispositif de commande (100) est configuré pour effectuer une première commande pour commander le moteur électrique (25) de sorte qu'une dent d'embrayage positionnée du côté où est commutée la dent d'embrayage fixe (46) tourne d'une largeur correspondant à une dent lors du changement de mode entre le premier mode et le second mode.

9. Presse plieuse (1) selon la revendication 8, dans laquelle
le dispositif de commande (100) est configuré pour effectuer un seconde commande pour commander le moteur électrique (25) de sorte que la dent d'embrayage tourne d'une largeur correspondant à une dent dans une direction opposée à la première commande, dans le cas où un mode n'est pas changé entre le premier mode et le second mode même lors de l'exécution de la première commande.

10. Presse plieuse (1) selon la revendication 6, dans laquelle le dispositif de détection (50) comporte :
une plaque de détection (51) qui est fixée à la dent d'embrayage fixe (46) et étendue vers un extérieur d'un boîtier pour loger l'embrayage (45) ; et
un capteur (52) qui est disposé à l'extérieur du boîtier et est configuré pour détecter la plaque de détection (51).

11. Presse plieuse (1) selon la revendication 5, dans laquelle
l'embrayage (45) comporte en outre un condensateur qui est configuré pour alimenter en énergie le solénoïde (49) lorsque l'énergie externe vers le solénoïde (49) est coupée.

12. Procédé d'entraînement de table pour une presse plieuse (1), la presse plieuse (1) comprenant :
une table fixe (5) ;
une table mobile (7) qui est disposée à l'opposé de la table fixe (5) dans une direction haut-bas ;
un moteur électrique (25) équipé d'un arbre de moteur électrique (26) ;
un réducteur de vitesse (31) qui comporte un mécanisme d'engrenage planétaire paradoxal mécanique, et délivre en sortie une rotation de l'arbre de moteur électrique (26) en réduisant la rotation de l'arbre de moteur électrique (26) selon un premier rapport de réduction ou un second rapport de réduction supérieur au premier rapport de réduction ; et
un embrayage (45) qui commute un rapport de réduction dans le réducteur de vitesse (31) entre le premier rapport de réduction et le second rapport de réduction ; et
un mécanisme de conversion (55) qui déplace la table mobile (7) dans la direction haut-bas en convertissant un mouvement de rotation transmis par le réducteur de vitesse (31) en un mouvement linéaire,
dans lequel l'embrayage (45) comporte :
une première dent d'embrayage (47) qui est reliée à un premier élément de rotation intégré dans le réducteur de vitesse (31) et tourne d'un seul tenant avec le premier élément de rotation ;
une deuxième dent d'embrayage (48) qui est reliée à un second élément de rotation intégré dans le réducteur de vitesse (31) et tourner d'un seul tenant avec le second élément de rotation ; et
une dent d'embrayage fixe (46) qui est disposée entre la première dent d'embrayage (47) et la deuxième dent d'embrayage (48) disposées pour être à l'opposé l'une de l'autre de sorte qu'une structure de dent de la première dent d'embrayage (47) et une structure de dent de la deuxième dent d'embrayage (48) sont en vis-à-vis l'une de l'autre, et se déplace entre la première dent d'embrayage (47) et la deuxième dent d'embrayage (48), et
lors de l'entraînement de la table mobile (7) dans une direction vers le haut ou une direction vers le bas,
le procédé d'entraînement de table pour la presse plieuse (1) comporte :
une première étape consistant à faire fonctionner le réducteur de vitesse (31) au second rapport de réduction en engrenant la dent d'embrayage fixe (46) uniquement avec la première dent d'embrayage (47) pour fixer le premier élément de rotation ;
une deuxième étape consistant à faire fonctionner le réducteur de vitesse (31) au premier rapport de réduction en engrenant la dent d'embrayage fixe (46) uniquement avec la deuxième dent d'embrayage (48) pour fixer le second élément de rotation ;
**caractérisé en ce que** le procédé d'entraînement de table pour la presse plieuse comporte
une troisième étape consistant à engrener la dent d'embrayage fixe (46) avec chacune de la première dent d'embrayage (47) et de la deuxième dent d'embrayage (48) lors d'un changement d'étape entre la première étape et la deuxième étape.
